# EUROPÄISCHE PATENTSCHRIFT

(11) **EP 3 274 192 B1**
(45) Veröffentlichungstag und Bekanntmachung des Hinweises auf die Patenterteilung: **25.07.2018**
(21) Anmeldenummer: 16703262.2
(22) Anmeldetag: 13.01.2016
(51) Int. Cl.: B60C 23/04, B60C 29/00, B60C 29/02

(54) **LUFTDRUCKMESSEINRICHTUNG FÜR EINEN FAHRZEUGREIFEN UND VERFAHREN ZUR MONTAGE DER LUFTDRUCKMESSEINRICHTUNG**
AIR PRESSURE MEASURING DEVICE FOR A VEHICLE TYRE AND METHOD FOR ASSEMBLING THE AIR PRESSURE MEASURING DEVICE
DISPOSITIF DE MESURE DE PRESSION D'AIR POUR PNEUMATIQUE DE VÉHICULE ET PROCÉDÉ DE MONTAGE DU DISPOSITIF DE MESURE DE PRESSION D'AIR

(30) Priorität: 24.03.2015 DE 102015104435
(43) Veröffentlichungstag der Anmeldung: 31.01.2018
(73) Patentinhaber: Alligator Ventilfabrik GmbH, 89537 Giengen (DE)
(72) Erfinder: PALAORO, Renato, 89518 Heidenheim (DE)
(74) Vertreter: Patentanwälte Behrmann Wagner PartG mbB
(86) Internationale Anmeldenummer: PCT/EP2016/050498
(87) Internationale Veröffentlichungsnummer: WO 2016/150579

(56) Entgegenhaltungen:
- EP-B1- 1 277 601
- CN-A- 1 865 030
- US-A- 5 215 137

## Beschreibung

### Stand der Technik

Die Erfindung betrifft eine Luftdruckmesseinrichtung für einen Fahrzeugreifen nach dem Oberbegriff des Anspruchs 1. Ferner betrifft die Erfindung ein Verfahren zur Montage einer erfindungsgemäßen Luftdruckmesseinrichtung an einer Fahrzeugfelge.

Eine Luftdruckmesseinrichtung für einen Fahrzeugreifen nach dem Oberbegriff des Anspruchs 1 sowie ein Verfahren zur Montage einer derartigen Luftdruckmesseinrichtung sind aus der EP 1 277 601 B1 der Anmelderin bekannt. Die bekannte Luftdruckmesseinrichtung umfasst dabei im Wesentlichen drei Elemente: Einen Ventilkörper, der in eine Durchgangsöffnung einer Fahrzeugfelge einsetzbar ist, eine an der Außenseite der Fahrzeugfelge auf den Ventilkörper aufschraubbare Überwurfmutter sowie ein an einer Stirnseite des Ventilkörpers auf der der Innenseite der Fahrzeugfelge zugewandten Seite angeordnetes Befestigungselement in Form einer Befestigungsschraube. Die Montage der Befestigungsschraube in dem Ventilkörper erfolgt mittels einer Gewindeverbindung, wobei die Befestigungsschraube eine Außenkontur aufweist, die formschlüssig mit einer an einem sogenannten Signalgehäuse ausgebildeten Geometrie zusammenwirkt, derart, dass die Befestigungsschraube in dem Signalgehäuse axial verschiebbar, jedoch drehwinkelfest angeordnet ist. Das Signalgehäuse ist wiederum drehfest mit der Fahrzeugfelge verbunden bzw. zu dieser angeordnet. Darüber hinaus weist die Überwurfmutter eine im Bereich ihres Gewindegangs ausgebildete Rippe auf. Beim Aufschrauben der Überwurfmutter auf den Gewindegang des Ventilkörpers gelangt dabei die Überwurfmutter mit der angesprochenen Rippe zunächst in Kontakt mit einer als Anschlag für die Rippe dienenden Fläche des Ventilkörpers. Dies bewirkt, dass die Überwurfmutter zunächst nicht mehr relativ zum Ventilkörper gedreht werden kann, sondern bei Einleitung eines Drehmoments auf die Überwurfmutter diese sich zusammen mit dem Ventilkörper um ihre Längsachse dreht. Dies hat aufgrund der drehwinkelfesten Montage der Befestigungsschraube in dem Signalgehäuse zur Folge, dass sich die Befestigungsschraube in das Gewinde des Ventilkörpers hineindreht. Sobald das Befestigungselement seine axiale Endposition in der Gewindeaufnahme des Ventilkörpers erreicht hat, erfolgt bei einer weiteren Drehmomentbeaufschlagung der Überwurfmutter eine Zerstörung bzw. ein Brechen der Rippe, wodurch die Überwurfmutter auf dem Gewindegang des Ventilkörpers weitergedreht werden kann. Dadurch verkürzt sich der axiale Abstand der der Durchgangsöffnung der Fahrzeugfelge zugewandten Stirnseite der Überwurfmutter zur Fahrzeugfelge, wodurch ein axiales Verspannen bzw. Fixieren des Ventilkörpers in der Durchgangsöffnung der Fahrzeugfelge ermöglicht wird. Gleichzeitig dichtet die Überwurfmutter, insbesondere, da im Bereich der Durchgangsöffnung ein Dichtelement angeordnet ist, den Innenraum der Fahrzeugfelge nach außen hin ab.

Wesentlich ist, dass die aus dem Stand der Technik bekannte Luftdruckmesseinrichtung sowohl an dem Ventilkörper, als auch an der Überwurfmutter miteinander zusammenwirkende Gewindegänge aufweist. Insbesondere aus Gründen der Vermeidung von Korrosion müssen die angesprochenen Bauteile (Ventilkörper und Überwurfmutter) aus einem korrosionsbeständigen Material bestehen bzw. mit einer entsprechenden Beschichtung ausgestattet sein. Dies erfolgt bei der Überwurfmutter beispielsweise dadurch, dass diese aus Aluminium besteht und mit einer Eloxierung versehen ist. Die Herstellung einer derartigen, ein Gewinde sowie die angesprochene Rippe und Beschichtung aufweisenden Überwurfmutter ist relativ aufwendig und damit kostenintensiv.

Weiterhin sind aus dem US 5 215 137 A und der CN 1 865 030 A selbsthemmende Gewindemuttern zur Verwendung bei Ventilkörpern bekannt, die jedoch nicht näher spezifiziert sind.

### Offenbarung der Erfindung

Ausgehend von dem dargestellten Stand der Technik liegt der Erfindung die Aufgabe zugrunde, eine Luftdruckmesseinrichtung für einen Fahrzeugreifen nach dem Oberbegriff des Anspruchs 1 derart weiterzubilden, dass verringerte Herstellkosten erzielbar sind, ohne dass die Funktionalität der Luftdruckmesseinrichtung beeinträchtigt wird.

Diese Aufgabe wird erfindungsgemäß bei einer Luftdruckmesseinrichtung für einen Fahrzeugreifen mit den kennzeichnenden Merkmalen des Anspruchs 1 dadurch gelöst, dass zur Ausbildung einer der beiden Gewindegänge zwischen dem Ventilkörper und der Überwurfmutter die beiden Elemente (Ventilkörper und Überwurfmutter) aus unterschiedlich harten Materialien bestehen, dass in dem aus dem härteren Material bestehenden Element ein selbstschneidender Gewindegang ausgebildet ist, und dass in dem aus dem weicheren Material bestehenden Element ein Verformungsabschnitt ausgebildet ist, in dem beim Zusammenwirken mit dem selbstschneidenden Gewindegang der andere Gewindegang ausbildbar ist.

Mit anderen Worten gesagt bedeutet dies, dass es gemäß der Erfindung nicht mehr erforderlich ist, an beiden die Gewindeverbindung ausbildenden Elemente (Ventilkörper und Überwurfmutter) jeweils vorab einen Gewindegang herstellen zu müssen. Dies hat zur Folge, dass dasjenige Element, das mit dem Element zusammenwirkt, das den selbstschneidenden Gewindegang aufweist, insofern geringere Herstellkosten erzielbar sind, als dass bei diesem Element bei seiner Herstellung vorab kein Gewindegang hergestellt werden muss.

Vorteilhafte Weiterbildungen der erfindungsgemäßen Luftdruckmesseinrichtung für einen Fahrzeugreifen sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

Ganz besonders bevorzugt ist eine Ausführungsform, bei der das aus dem härteren Material bestehende Element der Ventilkörper und das aus dem weicheren Material bestehende Element die Überwurfmutter ist. Dies hängt insbesondere damit zusammen, dass auf den Ventilkörper beispielsweise beim axialen Verspannen an der Fahrzeugfelge relativ hohe Kräfte wirken, die nicht zu einer Verformung des Ventilkörpers führen sollen. Eine derartige Gefahr würde jedoch bestehen, wenn der Ventilkörper aus einem relativ weichen Material besteht. Auch werden bei Verwendung einer Messelektronik durch das Gewicht der mit dem Ventilkörper verbundenen Messelektronik bei Hohen Raddrehzahlen hohe Fliehkräfte erzeugt, die über das Ventilgehäuse aufgenommen werden müssen.

Ganz besonders bevorzugt ist es darüber hinaus, wenn das aus dem weicheren Material bestehende Element aus Kunststoff ist. Dies hat zur Folge, dass beispielsweise dann der Ventilkörper aus Aluminium hergestellt werden kann, wobei der Ventilkörper trotz des im Vergleich zu Stahl weicheren Aluminiums mit seinem selbstschneidenden Gewindegang in dem Kunststoffmaterial den entsprechenden Gewindegang ausbilden kann. Darüber hinaus ermöglicht dies insbesondere, dass ein derartiges, aus Kunststoff bestehendes Element als Spritzgussteil ausgebildet werden kann. Als Kunststoffmaterial kommen vorzugsweise relativ harte Kunststoffe zur Anwendung, um auf den Ventilkörper die entsprechenden Kräfte zur axialen Verspannung an der Fahrzeugfelge übertragen zu können. Beispielhaft, und nicht einschränkend, sei dabei Polyamid als geeignetes Kunststoffmaterial genannt.

Zur Einleitung der benötigen Drehmomente auf die Überwurfmutter ist es darüber hinaus besonders vorteilhaft, wenn die Überwurfmutter an einer Außenfläche eine Werkzeugangriffsfläche aufweist. Eine derartige Werkzeugangriffsfläche ist insbesondere für den Fall, bei der die Überwurfmutter aus im Vergleich zu Metall relativ weichem Kunststoff besteht dazu geeignet, die benötigten Drehmomente auf die Überwurfmutter ohne deren Beschädigung bzw. Deformation übertragen zu können. Weiterhin ist es im Gegensatz zu einer aus Metall mit einer Beschichtung versehenen Überwurfmutter vorteilhaft, dass durch den Einsatz eines Werkzeugs keine Beschädigung der Beschichtung, die zu Korrosion führen kann, auftritt.

Um mit dem Ventilkörper ein Gehäuse zur Aufnahme einer Messeinrichtung verbinden zu können, ist es vorgesehen, dass der Ventilkörper an einer der Innenseite der Fahrzeugfelge zugeordneten Stirnseite über eine zusätzliche Gewindeverbindung mit einer Befestigungsschraube verbindbar ist, wobei die Befestigungsschraube vorzugsweise dazu ausgebildet ist, mit einem Teilbereich der Fahrzeugfelge zumindest mittelbar einen Formschluss zur drehwinkelfesten Positionierung der Befestigungsschraube zur Fahrzeugfelge auszubilden.

Obwohl ein soweit beschriebener Ventilkörper an der Außenseite der Fahrzeugfelge einerseits durch die Überwurfmutter, und andererseits üblicherweise durch eine aus Kunststoff bestehende Verschlusskappe gegen Medien geschützt ist, ist es darüber hinaus insbesondere zur Ausbildung einer über die Lebensdauer des Fahrzeugreifens betrachtet lösbaren Luftdruckmesseinrichtung sinnvoll, wenn der Ventilkörper mit einer Oberflächenbehandlung zur Ausbildung von Korrosionsschutzeigenschaften ausgestattet ist.

Die Erfindung umfasst auch ein Verfahren einer soweit beschriebenen erfindungsgemäßen Luftdruckmesseinrichtung an einer Fahrzeugfelge, bei dem der Ventilkörper von der Innenseite der Fahrzeugfelge in eine Durchgangsöffnung der Fahrzeugfelge eingesetzt wird und anschließend eine Überwurfmutter von der Außenseite der Fahrzeugfelge in Wirkverbindung mit dem Ventilkörper gebracht wird, wobei anschließend beim Drehen der Überwurfmutter relativ zum Ventilkörper der Ventilkörper mit einer Sitzfläche gegen eine Anlagefläche im Bereich der Durchgangsöffnung der Fahrzeugfelge axial verspannt wird. Erfindungsgemäß zeichnet sich das Verfahren dadurch aus, dass beim Drehen der Überwurfmutter relativ zum Ventilkörper durch ein an dem Ventilkörper oder der Überwurfmutter ausgebildetes selbstschneidendes Gewinde in der Überwurfmutter oder dem Ventilkörper ein Gewindegang ausgebildet wird.

In einer bevorzugten Weiterbildung des soweit beschriebenen erfindungsgemäßen Verfahrens ist es vorgesehen, dass der Ventilkörper auf der der Innenseite der Fahrzeugfelge zugewandten Seite mittels einer weiteren Gewindeverbindung mit einem Befestigungselement versehen wird, und dass beim Drehen der Überwurfmutter relativ zum Ventilkörper die Überwurfmutter mit dem Ventilkörper zeitweise gemeinsam um ihre Drehachse gedreht werden, wodurch das Befestigungselement relativ zum Ventilkörper gedreht wird. Dadurch lässt sich ein mit dem Befestigungselement verbundenes Signal- oder Elektronikgehäuse drehfest an der Fahrzeugfelge befestigen.

Um mittels des selbstschneidenden Gewindegangs in dem aus dem weicheren Material bestehenden Element den entsprechenden Gewindegang ausbilden zu können ist es darüber hinaus vorgesehen, dass zu Beginn des Drehens der Überwurfmutter relativ zum Ventilkörper eine Relativbewegung zwischen der Überwurfmutter und dem Ventilkörper stattfindet.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Teilquerschnitt durch eine Fahrzeugfelge für einen Fahrzeugreifen mit einem Reifenventil und einem daran festliegenden Signalgehäuse im fertig montierten Zustand und
- Fig. 2: eine zur Verwendung bei einem Reifenventil gemäß Fig. 1 verwendete, insbesondere aus Kunststoff bestehende Überwurfmutter einer teilweise geschnittenen Seitenansicht.

Gleiche Elemente bzw. Elemente mit gleicher Funktion sind in den Figuren mit den gleichen Bezugsziffern versehen.

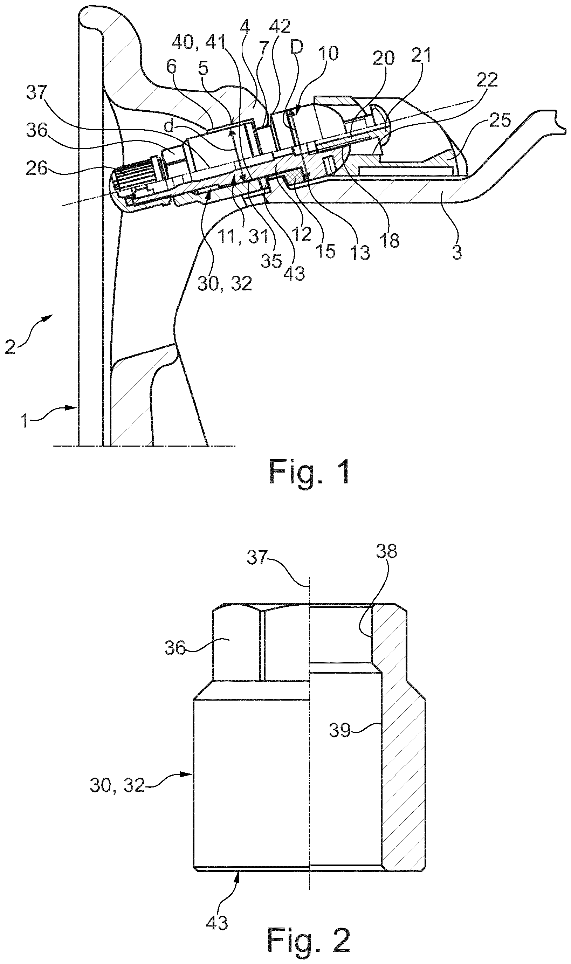

In der Fig. 1 ist ein Teil einer aus einer Aluminiumlegierung druckgegossenen Felge 1 für ein Fahrzeugrad 2 mit einem nicht dargestellten, luftbefüllten Fahrzeugreifen dargestellt. Die Fahrzeugfelge 1 weist ein radial umlaufendes Felgenbett 3 sowie im Bereich einer äußeren Seitenwange 4 ein Durchgangsloch 5 mit einem ersten Abschnitt 6 größeren Durchmessers und einem zweiten Abschnitt 7 geringeren Durchmessers auf. Das Durchgangsloch 5 dient der Aufnahme bzw. Befestigung eines Reifenventils bzw. einer Luftdruckmesseinrichtung 10.

Die Luftdruckmesseinrichtung 10 weist einen länglichen Ventilkörper 11 auf, der vorzugsweise, und nicht einschränkend, aus Aluminium besteht und mit korrosionshemmenden Maßnahmen, beispielsweise einer entsprechenden Beschichtung bzw. Eloxierung versehen ist. Der Ventilkörper 11 weist einen Durchführabschnitt 12 geringeren Durchmessers auf, der dem Durchmesser des zweiten Abschnitts 7 des Durchgangslochs 5 derart angepasst ist, dass ein axiales Durchführen des Ventilkörpers 11 durch den zweiten Abschnitt 7 des Durchgangslochs 5 ermöglicht wird. Auf der dem Felgenbett 3 zugewandten Seite weist der Ventilkörper 11 einen Sitzabschnitt 13 auf, dessen Durchmesser D größer ist als der Durchmesser d des Durchführabschnitts 12. Insbesondere ist der Durchmesser D des Sitzabschnitts 13 größer als der entsprechende (Innen-)Durchmesser des Durchgangslochs 5. Weiterhin ist auf den Ventilkörper 11 im Übergangsbereich zwischen dem Durchführabschnitt 12 zum Stützabschnitt 13 auf dem Durchführabschnitt 12 ein aus elastischem Material bestehendes Dichtelement 15 angeordnet, welches im Einbauzustand (Fig. 1) der Luftdruckmesseinrichtung 10 in das Durchgangsloch 5 hineinragt.

Auf der dem Felgenbett 3 zugewandten Stirnseite des Ventilkörpers 11 weist dieser eine Gewindebohrung 18 auf, die mit einem Außengewinde einer Befestigungsschraube 20 zusammenwirkt. Die Befestigungsschraube 20 weist an ihrem dem Ventilkörper 11 abgewandten Ende einen Schraubenkopf 21 auf, dessen Außenfläche ungleichförmig, beispielsweise mehreckig, geformt ist, derart, dass er im Bereich einer gegengleich geformten Aufnahmeöffnung 22 eines Signal- oder Elektronikgehäuses 25 eine drehmomentfeste Positionierung der Befestigungsschraube 20 ermöglicht. Einzelheiten bezüglich der Geometrie der Befestigungsschraube 20 sowie des Signal- bzw. Elektronikgehäuses 25 sind der EP 1 277 601 B1 entnehmbar, die insofern Bestandteil dieser Anmeldung sein soll.

Das insbesondere aus Kunststoff bestehende Signalgehäuse 25 liegt entsprechend der Darstellung der Fig. 1 mit einer Fläche an dem Felgenhorn 3 auf und wird mittels der Befestigungsschraube 20 axial gegen den Ventilkörper 11 verspannt. Das Signalgehäuse 25 dient beispielsweise der Aufnahme einer im Einzelnen nicht dargestellten Messeinrichtung zur Erfassung des Luftdrucks im Reifen des Fahrzeugrads 2 o.ä. Ohne die Verwendung eines Signalgehäuses 25 weist die soweit beschriebene Luftdruckmesseinrichtung 10 keine Befestigungsschraube 20 auf, wobei nichtsdestotrotz über die Luftdruckmesseinrichtung 10 beispielsweise durch Aufsetzen eines entsprechenden Anschlusses eines Reifendruckmessgerätes der Luftdruck im Reifen des Fahrzeugrads 2 ermittelt werden kann.

In dem Ventilkörper 11 ist in dessen Längsrichtung eine im Einzelnen nicht dargestellte Durchgangsbohrung ausgebildet, die pneumatisch mit dem Innern des Fahrzeugreifens verbunden ist. Zur (äußeren) Abdichtung des Ventilkörpers 11 dient eine auf den Endbereich des Ventilkörpers 11 aufschraubbare Verschlusskappe 26.

Um den Ventilkörper 11 in dem Durchgangsloch 5 der Fahrzeugfelge 1 zu befestigen bzw. axial zu verspannen und druckdicht anzuordnen dient eine in der Fig. 2 in Einzeldarstellung gezeigte Überwurfmutter 30. Während der Ventilkörper 11 ein erstes Element 31 zur Ausbildung einer Gewindeverbindung 35 ausbildet, bildet die Überwurfmutter 30 ein zweites Element 32 zur Ausbildung der Gewindeverbindung 35 aus. Erfindungswesentlich ist, dass das erste Element 31, im dargestellten Ausführungsbeispiel also der Ventilkörper 11, im Verhältnis zum zweiten Element 32, d.h. der Überwurfmutter 30, aus einem im Vergleich zum zweiten Element 32 härteren Material besteht. Für den Fall, dass der Ventilkörper 11, wie oben erläutert, beispielsweise aus Aluminium besteht, besteht das zweite Element 32 bzw. die Überwurfmutter 30 somit insbesondere aus Kunststoff. Es kann jedoch auch vorgesehen sein, dass für den Fall, dass der Ventilkörper 11 beispielsweise aus Stahl besteht, die Überwurfmutter 30 aus Aluminium besteht.

Für den Fall, dass die Überwurfmutter 30 aus Kunststoff besteht, ist diese insbesondere als Spritzgussteil ausgebildet und weist an einer Außenfläche eine Werkzeugangriffsfläche 36 (beispielsweise in Form eines Sechskants) auf, mittels derer die Überwurfmutter 30 um eine Längsachse 37 durch Aufbringung eines Drehmoments auf die Überwurfmutter 30 gedreht werden kann. Darüber hinaus weist die Überwurfmutter 30 eine zwei Abschnitten 38, 39 aufweisende Innenwand auf, wobei der eine geringeren Innendurchmesser aufweisende Abschnitt 38 im Bereich der Werkzeugangriffsfläche 36 angeordnet ist. Insbesondere sind die beiden Abschnitte 38, 39 mit einer unbearbeiteten bzw. relativ glatten Oberfläche ausgestattet. Der den größeren (Innen-) Durchmesser aufweisende Abschnitt 39 bildet einen Verformungsabschnitt zur Ausbildung der Gewindeverbindung 35 aus.

Der Ventilkörper 11 bzw. das erste Element 31 weist an seinem Außenumfang einen selbstschneidenden ersten Gewindegang 40 auf, der dazu ausgebildet ist, bei einer Relativdrehung zwischen dem Ventilkörper 11 und der Überwurfmutter 30 in dem Abschnitt 39 der Überwurfmutter 30 einen mit dem Gewindegang 40 zusammenwirkenden zweiten Gewindegang 41 auszubilden.

Die Montage einer soweit beschriebenen erfindungsgemäßen Luftdruckmesseinrichtung 10 an der Fahrzeugfelge 1 wird wie folgt erläutert: In einem ersten Schritt wird der Ventilkörper 11, zusammen mit der vormontierten Befestigungsschraube 20 und dem Signalgehäuse 25 von der Innenseite der Fahrzeugfelge 1 her durch das Durchgangsloch 5 hindurch gesteckt, bis der Ventilkörper 11 (unter Zwischenlage des Dichtelements 15) in Kontakt mit einer an der Innenseite der Fahrzeugfelge 1 ausgebildeten Anlagefläche 42 für den Stützabschnitt 13 gelangt. Anschließend wird die Überwurfmutter 30 auf den Durchführabschnitt 12 auf der der Innenseite der Fahrzeugfelge 1 abgewandten Seite aufgesteckt und bei Kontakt mit dem selbstschneidenden Gewindegang 40 um die Längsachse 37 gedreht. Dabei schneidet sich der erste Gewindegang 40 in das Material der Überwurfmutter 30 ein und beginnt den zweiten Gewindegang 41 auszubilden. Beim Drehen der Überwurfmutter 30 auf dem Ventilkörper 11 steigt dabei auf den Ventilkörper 11 das auf diesen übertragene Drehmoment an, wodurch sich der Ventilkörper 11 zusammen mit der Überwurfmutter 30 zu drehen beginnt. Dies hat zur Folge, dass die Befestigungsschraube 20 axial in die entsprechende Aufnahmeöffnung 32 des Signalgehäuses 25 hineinbewegt wird, da das Signalgehäuse 25 wiederum drehfest zur Fahrzeugfelge 1 bzw. zum Felgenhorn 3 angeordnet ist. Sobald entweder die Befestigungsschraube 20 in der Gewindebohrung 18 ihre axiale Endposition erreicht hat, d.h. auf Anschlag angeordnet ist, oder aber das über die Befestigungsschraube 20 auf den Ventilkörper 11 übertragene Drehmoment größer ist als das von der Überwurfmutter 30 auf den Ventilkörper 11 übertragene Drehmoment, beginnt die Überwurfmutter 30 sich unter weiterer Ausbildung des zweiten Gewindegangs 41 auf dem Ventilkörper 11 zu drehen, bis entsprechend der Darstellung der Fig. 1 die Überwurfmutter 30 innerhalb des ersten Abschnitts 6 des Durchgangslochs 5 ihre axiale Endposition erreicht hat, bei der die dem zweiten Abschnitt 7 des Durchgangslochs 5 zugewandte Stirnseite 43 der Überwurfmutter 30 am Übergang zwischen den beiden Abschnitten 6, 7 des Durchgangslochs 5 anliegt und bei einem weiteren Drehen der Überwurfmutter 30 den Ventilkörper 11 zusammen mit dem Dichtelement 15 axial gegen das Durchgangsloch 5 auf der dem ersten Abschnitt 6 abgewandten Seite des zweiten Abschnitts 5 des Durchgangslochs 5 presst.

Die soweit beschriebene Luftdruckmesseinrichtung 10 kann in vielfältiger Art und Weise abgewandelt bzw. modifiziert werden, ohne vom Erfindungsgedanken abzuweichen.

### Bezugszeichen

- 1: Fahrzeugfelge
- 2: Fahrzeugrad
- 3: Felgenbett
- 4: Seitenwange
- 5: Durchgangsloch
- 6: 1. Abschnitt
- 7: 2. Abschnitt

- 10: Luftdruckmesseinrichtung
- 11: Ventilkörper
- 12: Durchführabschnitt
- 13: Sitzabschnitt
- 15: Dichtelement
- 18: Gewindebohrung
- 20: Befestigungsschraube
- 21: Schraubenkopf
- 22: Aufnahmeöffnung
- 25: Signalgehäuse
- 26: Verschlusskappe
- 30: Überwurfmutter
- 31: erstes Element
- 32: zweites Element
- 35: Gewindeverbindung
- 36: Werkzeugangriffsfläche
- 37: Längsachse
- 38: Abschnitt
- 39: Abschnitt
- 40: Gewindegang
- 41: Gewindegang
- 42: Anlagefläche
- 43: Stirnseite

- d: Durchmesser
- D: Durchmesser

## Patentansprüche

1. Luftdruckmesseinrichtung (10) für ein Fahrzeugrad (2), mit einem ein erstes Element (31) ausbildenden Ventilkörper (11), der in eine Durchgangsöffnung (5) einer Fahrzeugfelge (1) einsetzbar ist, mit einer ein zweites Element (32) ausbildenden Überwurfmutter (30) zum axialen Verspannen des Ventilkörpers (11) an der Fahrzeugfelge (1), wobei zwischen dem Ventilkörper (11) und der Überwurfmutter (30) im Einbauzustand der Luftdruckmesseinrichtung (10) eine Gewindeverbindung (35) ausgebildet ist, die einen an dem Ventilkörper (11) ausgebildeten Gewindegang (40) und einen an der Überwurfmutter (30) ausgebildeten Gewindegang (41) umfasst,
**dadurch gekennzeichnet,**
**dass** zur Ausbildung einer der beiden Gewindegänge (40, 41) die beiden Elemente (31, 32) aus unterschiedlich harten Materialien bestehen, dass in dem aus dem härteren Material bestehenden Element (31) ein selbstschneidender Gewindegang (40) ausgebildet ist, und dass in dem aus dem weicheren Material bestehenden Element (32) ein Verformungsabschnitt (39) ausgebildet ist, in dem beim Zusammenwirken mit dem selbstschneidenden Gewindegang (40) der andere Gewindegang (41) ausbildbar ist.

2. Luftdruckmesseinrichtung nach Anspruch 1,
**dadurch gekennzeichnet,**
**dass** das aus dem härteren Material bestehenden Element (31) der Ventilkörper (11) und das aus dem weicheren Material bestehende Element (32) die Überwurfmutter (30) ist.

3. Luftdruckmesseinrichtung nach Anspruch 1 oder 2,
**dadurch gekennzeichnet,**
**dass** das aus dem weicheren Material bestehende Element (32) aus Kunststoff besteht.

4. Luftdruckmesseinrichtung nach Anspruch 3,
**dadurch gekennzeichnet,**
**dass** das aus dem weicheren Material bestehende Element (32) als Spritzgussteil ausgebildet ist.

5. Luftdruckmesseinrichtung nach einem der Ansprüche 1 bis 4,
**dadurch gekennzeichnet,**
**dass** an der Überwurfmutter (30) an einer Außenfläche eine Werkzeugangriffsfläche (36) ausgebildet ist.

6. Luftdruckmesseinrichtung nach einem der Ansprüche 1 bis 5,
**dadurch gekennzeichnet,**
**dass** der Ventilkörper (11) an einer der Innenseite der Fahrzeugfelge (1) zugeordneten Stirnseite über eine zusätzliche Gewindeverbindung (18) mit einer Befestigungsschraube (20) verbindbar ist, wobei die Befestigungsschraube (20) vorzugsweise dazu ausgebildet ist, mit einem Teilbereich der Fahrzeugfelge (1) zumindest mittelbar einen Formschluss zur drehwinkelfesten Positionierung der Befestigungsschraube (20) zur Fahrzeugfelge (1) auszubilden.

7. Luftdruckmesseinrichtung nach einem der Ansprüche 3 bis 6,
**dadurch gekennzeichnet,**
**dass** der Ventilkörper (11) mit einer Oberflächenbehandlung zur Ausbildung von Korrosionsschutzeigenschaften ausgestattet ist.

8. Verfahren zur Montage einer Luftdruckmesseinrichtung (10) an einem Fahrzeugrad (2) nach einem der Ansprüche 1 bis 7, bei dem der Ventilkörper (11) von der Innenseite der Fahrzeugfelge (1) in eine Durchgangsöffnung (5) der Fahrzeugfelge (1) eingesetzt wird und anschließend eine Überwurfmutter (30) von der Außenseite der Fahrzeugfelge (1) in Wirkverbindung mit dem Ventilkörper (11) gebracht wird, und dass anschließend beim Drehen der Überwurfmutter (30) relativ zum Ventilkörper (11) der Ventilkörper (11) gegen eine Anlagefläche (42) im Bereich der Durchgangsöffnung (5) der Fahrzeugfelge (1) axial verspannt wird,
**dadurch gekennzeichnet,**
**dass** beim Drehen der Überwurfmutter (30) relativ zum Ventilkörper (11) durch einen an dem Ventilkörper (11) oder der Überwurfmutter (30) ausgebildetes selbstschneidenden Gewindegang (40) in der Überwurfmutter (30) oder dem Ventilkörper (11) ein anderer Gewindegang (41) ausgebildet wird.

9. Verfahren nach Anspruch 8,
**dadurch gekennzeichnet,**
**dass** der Ventilkörper (11) auf der der Innenseite der Fahrzeugfelge (1) zugewandten Seite mittels einer weiteren Gewindeverbindung (18) mit einem Befestigungselement (20) versehen wird, und dass beim Drehen der Überwurfmutter (30) relativ zum Ventilkörper (11) die Überwurfmutter (30) mit dem Ventilkörper (11) zeitweise gemeinsam um ihre Drehachse (37) gedreht werden, wodurch das Befestigungselement (20) relativ zum Ventilkörper (11) gedreht wird.

10. Verfahren nach Anspruch 9,
**dadurch gekennzeichnet,**
**dass** zu Beginn des Drehens der Überwurfmutter (30) relativ zum Ventilkörper (11) eine Relativbewegung zwischen der Überwurfmutter (30) und dem Ventilkörper (11) stattfindet.

## Claims

1. An air pressure measuring device (10) for a vehicle wheel (2), comprising a valve body (11) which forms a first element (31) and which can be inserted into a passage opening (5) of a vehicle rim (1), comprising a union nut (30) which forms a second element (32) for axially interlocking the valve body (11) on the vehicle rim (1), a threaded connection (35) being formed between the valve body (11) and the union nut (30) when the air pressure measuring device (10) is in the installed state, said threaded connection (35) comprising a thread (40) formed on the valve body (11) and a thread (41) formed on the union nut (30),
**characterized in that**
for one of the two threads (40, 41) to be formed, the two elements (31, 32) are made of materials of different hardness, **in that** a self-cutting thread (40) is formed in the element (31) made of the harder material, and **in that** a deforming section (39) in which the other thread (41) can be formed when cooperating with the self-cutting thread (40) is formed in the element (32) made of the softer material.

2. The air pressure measuring device according to claim 1,
**characterized in that**
the element (31) made of the harder material is the valve body (11) and the element (32) made of the softer material is the union nut (30).

3. The air pressure measuring device according to claim 1 or 2,
**characterized in that**
the element (32) made of the softer material is made of plastic.

4. The air pressure measuring device according to claim 3,
**characterized in that**
the element (32) made of the softer material is an injection-molded part.

5. The air pressure measuring device according to any one of claims 1 to 4,
**characterized in that**
on the union nut (30), a tool engagement surface (36) is formed on an outer surface.

6. The air pressure measuring device according to any one of claims 1 to 5,
**characterized in that**
on a front side associated with the inner side of the vehicle rim (1), the valve body (11) can be connected to a fixing screw (20) via an additional threaded connection (18), the fixing screw (20) preferably being configured to at least indirectly form a form fit with a portion of the vehicle rim (1) so as to position the fixing screw (20) at a fixed angle of rotation relative to the vehicle rim (1).

7. The air pressure measuring device according to any one of claims 3 to 6,
**characterized in that**
the valve body (11) is provided with a surface treatment for producing anti-corrosion properties.

8. A method for installing an air pressure measuring device (10) on a vehicle wheel (2) according to any one of claims 1 to 7, in which the valve body (11) is inserted into a passage opening (5) of the vehicle rim (1) from the inner side of the vehicle rim (1) and then a union nut (30) is operatively connected to the valve body (11) from the outer side of the vehicle rim (1) and in that the valve body (11) is subsequently axially interlocked against a contact surface (42) in the area of the passage opening (5) of the vehicle rim (1) when the union nut (30) is turned relative to the valve body (11),
**characterized in that**
when the union nut (30) is turned relative to the valve body (11), a self-cutting thread (40) formed on the valve body (11) or on the union nut (30) forms another thread (41) in the union nut (30) or in the valve body (11).

9. The method according to claim 8,
**characterized in that**
the valve body (11) is provided with a fixing element (20) on the side facing toward the inner side of the vehicle rim (1) by means of another threaded connection (18), and **in that** when the union nut (30) is turned relative to the valve body (11), the union nut (30) is temporarily turned together with the valve body (11) about its axis of rotation (37), whereby the fixing element (20) is turned relative to the valve body (11).

10. The method according to claim 9,
**characterized in that**
at the beginning of the turning of the union nut (30) relative to the valve body (11), relative movement takes place between the union nut (30) and the valve body (11).

## Revendications

1. Dispositif de mesure de pression d'air (10) pour une roue de véhicule (2), comprenant un corps de valve (11) qui forme un premier élément (31) et qui peut inséré dans un orifice traversant (5) d'une jante de véhicule (1), comprenant un écrou-raccord (30) qui forme un deuxième élément (32) destiné à serrer axialement le corps de valve (11) sur la jante de véhicule (1), un raccord fileté (35) étant formé entre le corps de valve (11) et l'écrou-raccord (30) en état monté du dispositif de mesure de pression d'air (10), ledit raccord fileté (35) comprenant un filet (40) formé sur le corps de valve (11) et un filet (41) formé sur l'écrou-raccord (30),
**caractérisé en ce qu'**
afin qu'un des deux filets (40, 41) soit formé, les deux éléments (31, 32) sont fabriqués en matériaux des duretés différentes, **en ce qu'**un filet autotaraudeur (40) est formé dans l'élément (31) fabriqué en matériau plus dur, et **en ce qu'**une partie de déformation (39) dans laquelle l'autre filet (41) peut être formé en coopération avec le filet autotaraudeur (40) est formée dans l'élément (32) fabriqué en matériau plus mou.

2. Dispositif de mesure de pression d'air selon la revendication 1,
**caractérisé en ce que**
l'élément (31) fabriqué en matériau plus dur est le corps de valve (11) et l'élément (32) fabriqué en matériau plus mou est l'écrou-raccord (30).

3. Dispositif de mesure de pression d'air selon la revendication 1 ou la revendication 2,
**caractérisé en ce que**
l'élément (32) fabriqué en matériau plus mou est en plastique.

4. Dispositif de mesure de pression d'air selon la revendication 3,
**caractérisé en ce que**
l'élément (32) fabriqué en matériau plus mou est une pièce moulée par injection.

5. Dispositif de mesure de pression d'air selon l'une quelconque des revendications 1 à 4,
**caractérisé en ce que**
sur l'écrou-raccord (30), une surface de prise d'outil (36) est formée sur une surface extérieure.

6. Dispositif de mesure de pression d'air selon l'une quelconque des revendications 1 à 5,
**caractérisé en ce que**
sur une face frontale associée avec le côté intérieur de la jante de véhicule (1), le corps de valve (11) peut être relié à une vis de fixation (20) à l'aide d'un raccord fileté (18) additionnel, la vis de fixation (20) étant configurée, de préférence, pour former au moins indirectement une liaison par forme avec une partie de la jante de véhicule (1) afin de positionner la vis de fixation (20) à un angle de rotation fixe par rapport à la jante de véhicule (1).

7. Dispositif de mesure de pression d'air selon l'une quelconque des revendications 3 à 6,
**caractérisé en ce que**
le corps de valve (11) est doté d'un traitement de surface destiné à produire des propriétés anti-rouille.

8. Procédé de montage d'un dispositif de mesure de pression d'air (10) sur une roue de véhicule (2) selon l'une quelconque des revendications 1 à 7, dans lequel le corps de valve (11) est inséré dans un orifice traversant (5) de la jante de véhicule (1) depuis le côté intérieur de la jante de véhicule (1) et ensuite un écrou-raccord (30) est met en liaison fonctionnelle avec le corps de valve (11) depuis le côté extérieur de la jante de véhicule (1) et en ce qu'ensuite le corps de valve (11) est serré axialement contre une surface de contact (42) dans la région de l'orifice traversant (5) de la jante de véhicule (1) quand l'écrou-raccord (30) est tourné par rapport au corps de valve (11),
**caractérisé en ce que**
quand l'écrou-raccord (30) est tourné par rapport au corps de valve (11), un filet autotaraudeur (40) formé sur le corps de valve (11) ou sur l'écrou-raccord (30) forme un autre filet (41) dans l'écrou-raccord (30) ou dans le corps de valve (11).

9. Procédé selon la revendication 8,
**caractérisé en ce que**
le corps de valve (11) est doté d'un élément de fixation (20) sur le côté tourné vers le côté intérieur de la jante de véhicule (1) par l'intermédiaire d'un autre raccord fileté (18), et **en ce que** quand l'écrou-raccord (30) est tourné par rapport au corps de valve (11), l'écrou-raccord (30) est tourné temporairement conjointement avec le corps de valve (11) atour de son axe de rotation (37), l'élément de fixation (20) étant ainsi tourné par rapport au corps de valve (11).

10. Procédé selon la revendication 9,
**caractérisé en ce qu'**
au début de la rotation de l'écrou-raccord (30) par rapport au corps de valve (11), un déplacement relatif a lieu entre l'écrou-raccord (30) et le corps de valve (11).
